# EUROPEAN PATENT SPECIFICATION

(11) **EP 2 730 830 B1**
(45) Date of publication and mention of the grant of the patent: **11.03.2015**
(21) Application number: 13196419.9
(22) Date of filing: 10.12.2013
(51) Int. Cl.: F16L 55/035, F16L 3/10, F16L 3/13

(54) **Pipe pre-fixing sound-insulating clamp**
Schallschutzklemme mit Rohrvorfixierung
Bride d'isolation phonique avec pré-fixation de tuyau

(30) Priority: 11.12.2012 CN 201220677082 U; 07.05.2013 CN 201310163097
(43) Date of publication of application: 14.05.2014
(73) Proprietor: Wu, Jian, Nantong Jiangsu (CN)
(72) Inventor: Wu, Jian, Nantong Jiangsu (CN)
(74) Representative: Sun, Yiming

(56) References cited:
- EP-A1- 1 231 422
- WO-A1-2006/005826
- DE-A1- 3 128 496

## Description

### Field of the Invention

The present invention relates to a practical new-type pipe clamp. Specifically, the invention relates to a sound-insulating clamp to be used to hold, and clamp the pipes pre-fixing temporarily during installation and preliminary test.

### Background of the Invention

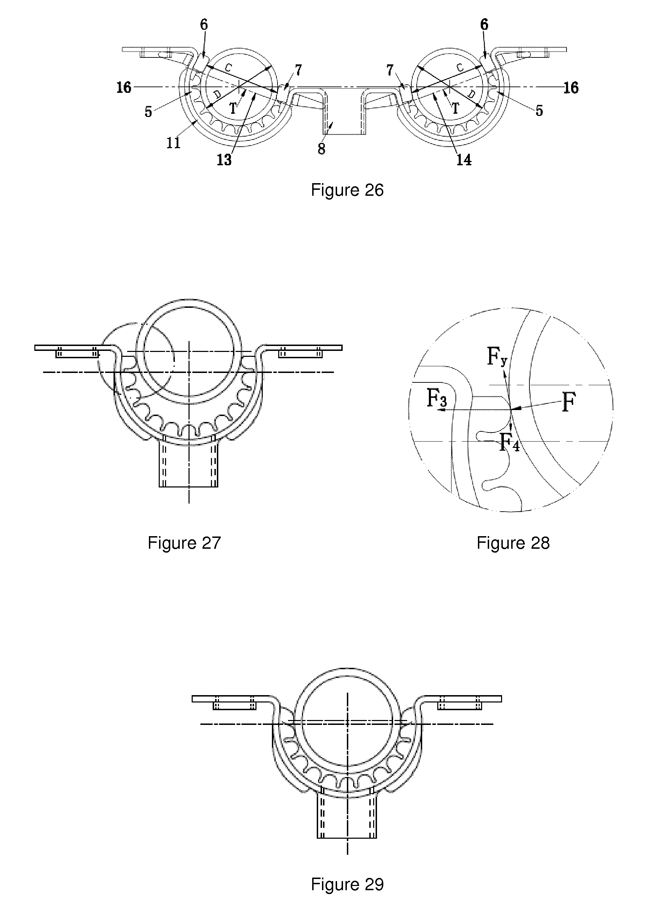

Of the readily available coupling pipe clamps, before the two main coupling components, to which the inner sound-insulating cushion pads are adhering, are coupled and clamped, one of the two main components to which an inner sound-insulating cushion pad is adhering cannot firmly hold pipe temporarily on its own in the process of pipe installation and preliminary test, even if its arc length is greater than the semicircular arc. Because the attached sound-insulating cushion pad should have a certain geometrical shape and chemical composition in order to meet the related EU Regulation (the standard of sound insulation: DIN4109, the standard of fire behavior: DIN4104 class B and the standard of hardness: 45±5°shore), these factors lead to that the cushion pad is soft and elastic. Shown as in Figure 27, the main component of the readily available coupling pipe clamp has an arc length that is greater than the semicircular arc, to which sound-insulating cushion pad is adhering, because the cushion pad has a certain thickness and the smallest distance between right and left top of cushion pads is smaller than the outside diameter of pipe, when the installers put the pipe into the component, the pipe is blocked at the top of sound-insulating cushion pad and there will be a pressure F between pipe and cushion pad consequently. Figure 28 shows that, according to the mechanics principle, the pressure F on the top of cushion pad can be divided into force F3 and F4, of which F3 is absorbed by the cushion pad and could not be passed to the body of component completely, so force F3 cannot make the circular arc of component open to let pipe go inside. Besides, force F4 will lead to relative motion trend between pipe and cushion pad, this trend will produce friction force Fy which will prevent the pipe from getting into component. If the installers increase the pressure F, component force F3 will result in cushion pad deformation which increases the contact area between the pipe and the cushion pad, that is to say, the bigger the pressure F, the bigger the contact area and the friction Fy. According to Figure 29, even though the installers force the pipe to go inside onto the inner surface of the component to which the inner sound-insulating cushion pad is adhering, after the installers cancel the pressure F, the cushion pad after extrusion will produce an elastic force which will push the pipe out of the inner surface of the component, the diameter line of the pipe cannot keep overlap with the diameter line of the component. Therefore, the component to which the sound-insulating cushion pad is adhering cannot hold firmly the pipe on its own. When the pipe is overhung or in its vertical installation, the elastic force of the cushion pad and the gravity of the pipe itself will cause the pipe to fall off the component if the two main coupling components are not closed and locked together. In order to regulate the pipe during the installation and preliminary test, the installers have to lock, open and re-lock the locking mechanism repeatedly. During the process of regulation, the main coupling component, the parts of the locking mechanism and the like easily fall apart. Similarly, the pipe and the sound-insulating cushion pads fall easily off the clamp. Hence, all these cause inconvenience and trouble to the installers.

The international application WO 2006/005826 A1 (corresponding to the preamble of claim 1) discloses an invention concerning clamp collars, on a support, of tubes or the like with radius (R). The inventive clamp collar is essentially characterized in that it comprises two half-collars, the inner wall of the half-collar having the shape of a cylindrical segment of radius (R) and a center angle equal to p + 2a, with 0 < 2a <p, the inner wall of the half collar having the shape of a cylindrical segment of radius (R) and center angle not greater than p - 2a; means for assembling the two half-collars consisting of planar wings, the four wings extending outside the two half-collars, the two wings secured to one half-collar being located in a common plane substantially perpendicular to the bisecting plane of the center angle of said half-collar, and means for attaching the two wings secured to a half-collar to the two wings secured to the other half-collar.

The German application DE 3128496 A1 discloses a holder for conveyor tubes, in particular in the case of concrete pumps, characterized in that a coupling shell part having an opening angle of 180-240° is fixedly fitted to the supporting structure, while the supplementary coupling part is detachable at the moment, the coupling lever hanging downwards, the supplementary part, folded upwards, reaching a secured rest position and the shell parts being provided with an elastic insert whose opening width is preferably smaller than the tube diameter, so that a resistance has to be overcome on removal or installation of the conveyor tube.

### Summary of the Invention

The purpose of this invention is to provide a reasonably-structured pipe clamp with which a pipe pre-fixing apparatus is equipped and to which sound-insulating cushion pads are adhering inside. One of the two main components (component 1) can firmly hold the pipe temporarily on its own during the installation and preliminary test of pipes before the two main components are coupled and clamped, which makes pipe installation and preliminary test more convenient and efficient.

The sound-insulating pipe clamp, with a pipe pre-fixing apparatus-a pair of cleats, comprises two main coupling components 1 and 2, a locking mechanism 3 for the two main coupling components and a connecting mechanism 8 for fixing the clamp to a support. After the pipe is clamped by the two main coupling components and locked by the mechanism 3, a circular arc, or an approximate circular arc, is formed. To this end, the arc length of one (component 1) of the two main coupling components is greater than the semicircular arc, and that of the other (component 2) is smaller than the semicircular arc. This clamp is characterized by:
a) Its sound-insulating cushion pads 4 and 5 are adhering to the inner surfaces of the two main coupling components 1 and 2 (the inner surface of component 1 excludes the sections of arc surface or plane surface for cleats 6 and 7), of which component 1 has an arc length that is greater than the semicircular arc, and the inner arc surface of component 1 to which sound-insulating cushion pad 5 is adhering is smaller than or at most equal to the semicircular arc (i.e. below diameter line 15).
b) The right and left inner sides of the arc surface (or plane surface)-where the inner surface of the circular arc is greater than or equal to the semicircular arc (i.e. above diameter line 15)-of component 1, which has an arc length that is greater than the semicircular arc, are equipped with hard cleats 6 and 7.
c) The smallest distance C between left and right hard cleats 6 and 7 is a little less than the inner diameter D of the inner circular arc to which cushion pad 5 is adhering (i.e. outer diameter D of the pipe to be clamped).
d) Each cleat has a pair of ∩ shape wings, and the inner distance between the two opposite wings is a little larger than or equal to the width Y of cushion pad 5. Both ends of cushion pad 5 are clamped in the ∩ shape wings of cleats 6 and 7 respectively.

The aforesaid hard cleats 6 and 7 should be inserted into the two pairs of holes 9 and 10 in main component 1, with their projecting parts tightly close against main component 1.

The connection and/or adhesion of the aforesaid hard cleats 6 and 7 to main component 1 can be achieved by means of any other ways, methods and forms.

The design of this practical new-type pipe clamp is reasonable in structure. First, one of the two coupling components (component 1), which has an arc length that is greater than the semicircular arc, and to which cushion pad is adhering inside, can firmly hold pipe temporarily on its own in the process of pipe installation and preliminary test by taking advantage of the hardness of hard cleats; of the smallest distance C between the left and right hard cleats a little less than the inner diameter D of the inner circular arc to which cushion pad 5 is adhering (i.e. outer diameter of the pipe to be clamped); and of the circular arc greater than the semicircular arc and its elasticity. Second, the cushion pad adhering to the main component 1 can be kept from moving and falling off by both the left and right cleats fixed on main component 1. Therefore, the invention can prevent the pipe, the cushion pad, the main component, the parts of the locking mechanism and the like from falling off during pipe installation and preliminary test, which saves the installers opening and re-locking the clamp and makes pipe installation more convenient and efficient.

### Brief Description of the Drawings

Having thus described the invention in general terms, reference will now be made to the accompanying drawings, and wherein:
Figure 1 is a structure diagram of the clamp according to one embodiment of the present invention;
Figure 2 is left side view of Figure 1;
Figure 3 is right side view of Figure 1;
Figure 4 is a top side view of Figure 1;
Figure 5 is a bottom side view of Figure 1;
Figure 6 is a structure diagram of the cushion pad;
Figure 7 is a top side view of Figure 6;
Figure 8 is a structure diagram of the hard cleat;
Figure 9 is a top side view of Figure 8;
Figure 10 is right side view of Figure 8;
Figure 11 and Figure 12 are combined structure diagrams of main component 1 and hard cleats, showing the positions of two pairs of holes 9 and 10, illustrating how a pair of hard cleats 6 and 7 are well fitted in holes 9 and 10; and
Figure 13 is a schematic diagram showing that main component 1 is equipped with a pair of hard cleats 6 and 7 and the positions of a pair of hard cleats 6 and 7 after installation;
Figure 14 is an A-A cross-section view of Figure 13;
Figure 15, Figure 16 and Figure 17 show schematically working principle of main component 1 according to one embodiment of the present invention, illustrating how the main component 1 is operated during pipe installation; and
Figure 18 is a schematic diagram showing how component 1 can firmly hold the pipe on its own during installation and preliminary test;
Figure 19 is a structure diagram of the clamp according to another embodiment of the present invention;
Figure 20 is a top side view of Figure 19;
Figure 21 is a bottom side view of Figure 19;
Figure 22 is a combined structure diagram of main component 11 and hard cleats according to another embodiment of the present invention, showing the positions of four pairs of holes 9 and 10, illustrating how two pairs of hard cleats 6 and 7 are well fitted in the four pairs of holes 9 and 10; and
Figure 23 is a schematic diagram, showing main component 11 is equipped with two pairs of hard cleats 6 and 7, and the positions of the two pairs of hard cleats 6 and 7 after installation;
Figure 24 and Figure 25 are working principle diagrams of main component 11 according to another embodiment of the present invention, illustrating how main component 11 is operated during pipe installation; and
Figure 26 is a schematic diagram showing how component 11 can firmly hold 2 sections of pipes on its own during installation and preliminary test;
Figure 27, Figure 28 and Figure 29 are schematic diagrams of the readily available coupling pipe clamps, illustrating how the cushion pad block the pipe inside, how the friction force Fy is produced and how component force F3 makes the both ends of cushion pad deformed;
Figure 30 is a structure diagram of one of the other cushion pads;
Figure 31 is side view of Figure 30;
Figure 32 is a structure diagram of one of the other hard cleats;
Figure 33 is a bottom side view of Figure 32;
Figure 34 is right side view of Figure 32.

### Detailed Description of the Embodiments

The present invention now will be described more fully hereinafter with reference to the accompanying drawings, in which two examples of the embodiments of the invention are shown. Indeed, the invention may be embodied in many different forms and should not be construed as limited to the embodiments set forth herein; rather, these embodiments are provided by means of example so that this disclosure will satisfy applicable legal requirements. Like numbers refer to like elements throughout.

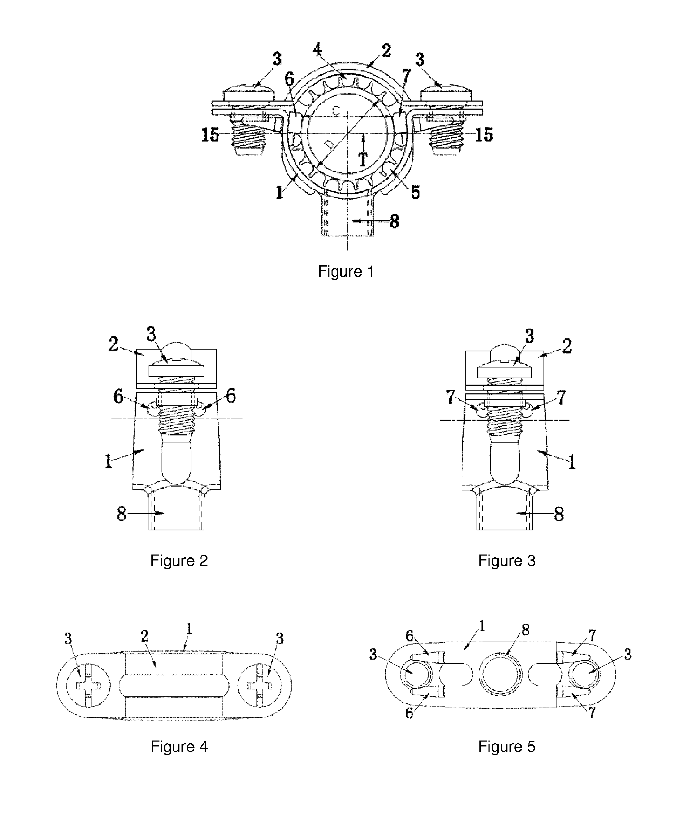

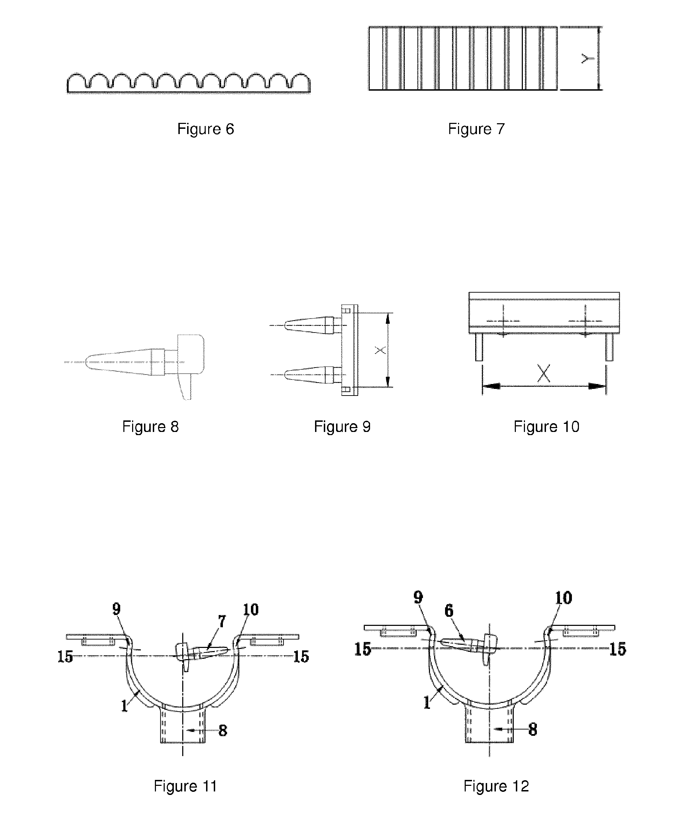

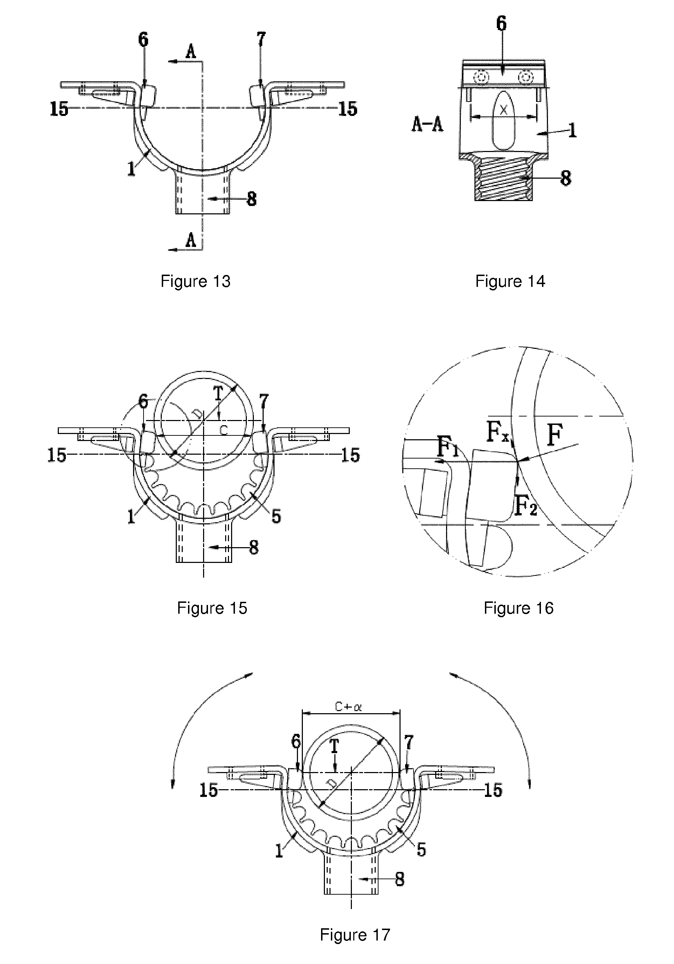

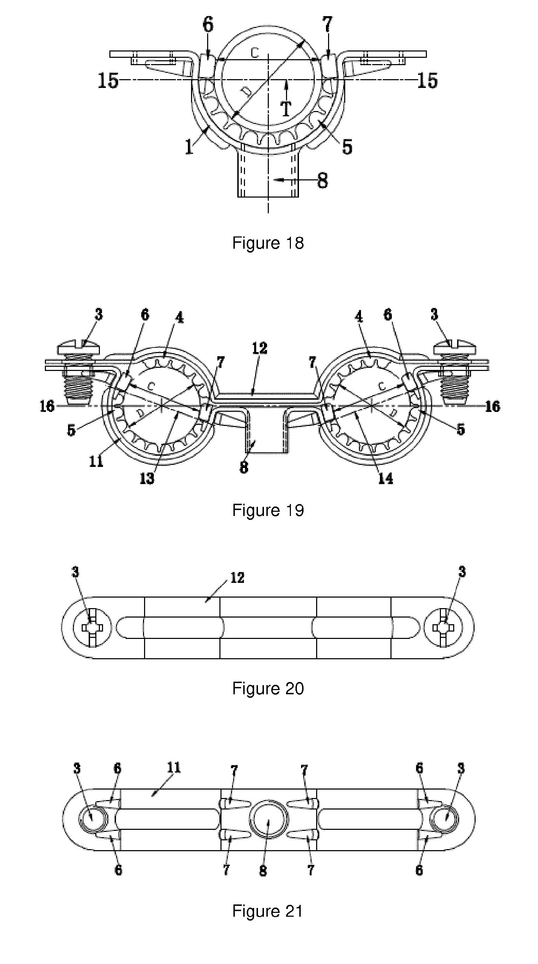

Figures from 1 to 18 show from different points of view a particular embodiment of the pipe pre-fixing sound-insulating clamp to which cushion pads are adhering inside. The sound-insulating pipe clamp, with pipe pre-fixing apparatus-a pair of cleats, comprises two main coupling components 1 and 2, a locking mechanism 3 for the two main coupling components and a connecting mechanism 8 for fixing the clamp to a support. After the pipe is clamped by the two main coupling components and locked by the mechanism 3, a circular shape, or an approximate circular shape, is formed. Figure 1, Figure 2, Figure 3, Figure 4 and Figure 5 illustrate that the arc length of main component 1 is greater than the semicircular arc, and that of component 2 is smaller than the semicircular arc and that cushion pads 4 and 5 are adhering to the inner surfaces of the two main components. The inner arc surface of main component 1 to which sound-insulating cushion pad 5 is adhering is smaller than or at most equal to the semicircular arc (i.e. below diameter line 15), though main component 1 has an arc length that is greater than the semicircular arc. Figure 6 and Figure 7 show the width Y of a cushion pad. Figure 8, Figure 9 and Figure 10 show that there is a pair of ∩ shape wings on the hard cleat and the inner distance of two opposite ∩ shape wings is X, X is a little larger or equal to Y Figure 11 and Figure 12 show that the right and left top sections (above diameter line 15) of main component 1 are provided with two pairs of holes 9 and 10. Figure 13 and Figure 14 (A-A cross-section view of Figure 13) indicate that hard cleats 6 and 7 are respectively inserted into holes 9 and 10 with their projecting parts inside. Figure 15 gives an illustration that the smallest distance C between cleats 6 and 7 must be a little less than inner diameter D of the inner circular arc (namely the outside diameter of the pipe to be clamped) which is formed after cushion pad is adhering to component 1. Figure 18 shows that component 1 with a greater arc length than semicircular arc can firmly hold pipe temporarily on its own at the moment of pipe installation and preliminary test, though to which cushion pad is adhering inside. The table A shows the related dimensions between C and D, numerical value C is between 96% and 99% of D.

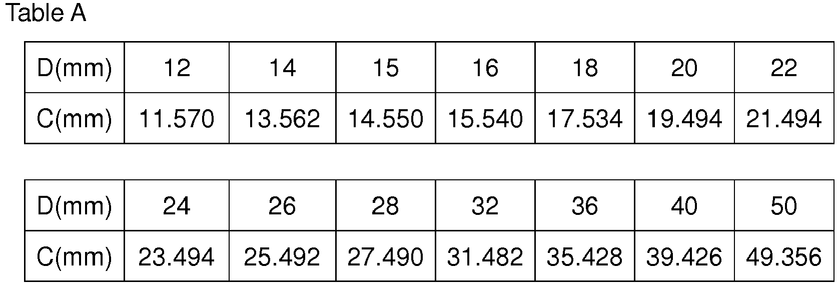

When the installers put the pipe into component 1, the pipe is blocked at the top of hard cleat 6 and 7 instead of cushion pad, and there will be a pressure F between the pipe and the hard cleats consequently. Shown as in Figure 16, according to mechanics principle, pressure F on the top of the hard cleats can be divided into component force F1 and F2, of which F1 can be passed to the body of component 1 completely through the hard cleats because of enough hardness of the cleats, so force F1 can make the circular arc of component 1 open to let pipe go inside. Of course, component force F2 will also lead to relative motion trend between the pipe and the hard cleats, and this trend will produce friction force Fx which will prevent the pipe from getting into component 1. However, because the contact area between the pipe and the hard cleats is only one line, the coefficient of friction and corresponding friction force Fx is accordingly getting very small. According to Figure 17, when the installers increase pressure F, component force F1 can make the circular arc of component 1 open enough and component force F2 can overcome friction force Fx to let pipe get into the bottom of component 1 to which sound-insulating cushion pad is adhering inside. The smallest distance C between left and right hard cleats 6 and 7 will vary from small to big and to small again in the process, the variation factor α of the C is between 0 and (D-C). Besides, the cushion pad is not deformed due to no extrusion from the pipe, thus there is no elastic force to push the pipe out of the inner surface of component 1, with an overlap between diameter line T of the pipe and diameter line 15 of component 1. After the installers cancel pressure F, the gravity of the pipe itself is not enough to make the circular arc of component 1 open and overcome the resistance of the hard cleats, even if the pipe is overhung or in its vertical installation, the hard cleats 6 and 7 can block the pipe and prevent the pipe from falling off component 1. Moreover, when installers turn or slide or take out the pipe in component 1, because the ∩ shape wings of the hard cleats clamp the cushion pad, the cushion pad gets protection to avoid moving and falling off. Therefore, component 1 to which the sound-insulating cushion pad is adhering can firmly hold the pipe temporarily on its own during pipe installation and preliminary test.

Figures from 19 to 26 illustrate from different points of view another embodiment of this invention.

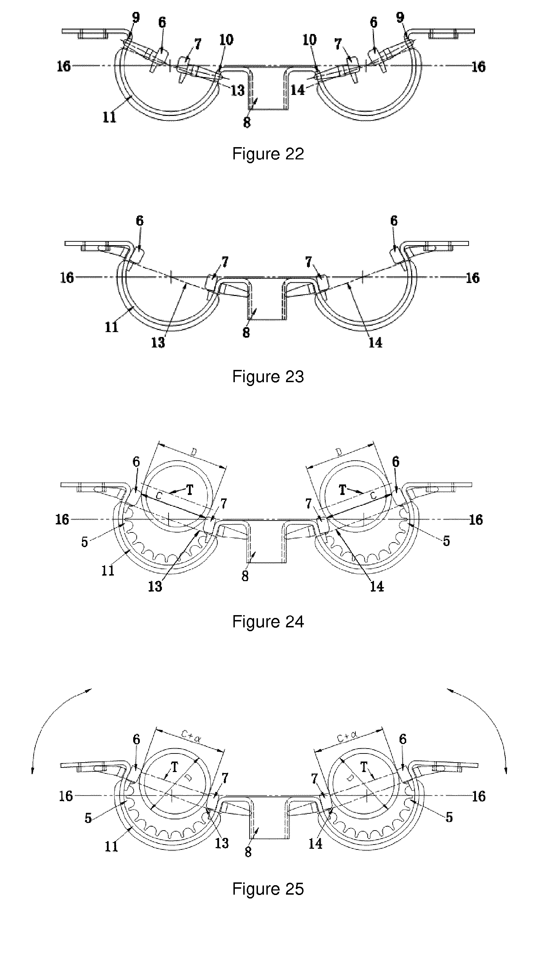

The functions of components 11 and 12 are respectively the same as those of the aforesaid components 1 and 2. The indication of diameter lines 13 and 14 are similar to that of the aforesaid diameter line 15, and the central line 16 connects the centers of the two circles. Figure 19, Figure 20 and Figure 21 show that the circular arc length of main component 11 is greater than the semicircular arc, and that of main component 12 is smaller than the semicircular arc and that cushion pads 4 and 5 are adhering to the inner surfaces of the two main components. The inner arc surface of main component 11 to which sound-insulating cushion pads 5 are adhering is smaller than or at most equal to the semicircular arc (i.e. below diameter lines 13 and 14). Figure 22 and Figure 23 indicate that on the top sections without cushion pads (i.e. above diameters 13 and 14) of component 11 with an arch length greater the semicircular arc are equipped with two pairs of hard cleats 6 and 7, that these hard cleats are respectively inserted into holes 9 and 10 with their projecting parts inside. Figure 24 gives an illustration that the smallest distance C between left and right hard cleats 6 and 7 must be a little less than inner diameter D of the inner circular arc (namely the outside diameter of the pipe to be clamped) which is formed after cushion pad is adhering to component 11. Figure 26 shows that component 11 with a greater arc length than semicircular arc can firmly hold two pipes simultaneously on its own at the moment of pipe installation and preliminary test, though to which cushion pads are adhering inside. The table A shows the related dimensions between C and D, numerical value C is between 96% and 99% of D.

When the installers put 2 sections of pipes into main component 11, the pipes are blocked at the top of hard cleats 6 and 7, the same as in the aforesaid embodiment, and Figure 16 shows there will be a pressure F between the pipe and the hard cleats consequently. According to mechanics principle, pressure F on the top of the hard cleats can be divided into component force F1 and F2, of which F1 can be passed to the body of component 11 completely through the hard cleats because of enough hardness of the cleats, so force F1 can make the circular arc of component 11 open to let the pipe go inside. There is also friction force Fx which will prevent the pipe from getting into main component 11. However, because the contact area between the pipe and the hard cleats is only one line, the coefficient of friction and corresponding friction force Fx is accordingly getting very small. Figure 25 indicates that when the installers increase pressure F, component force F1 can make the circular arc of component 11 open enough and component force F2 can overcome friction force Fx to let the pipe go into the bottom of component 11 to which sound-insulating cushion pad is adhering inside. The smallest distance C between left and right hard cleats 6 and 7 will vary from small to big and to small again in the process, the variation factor α of the C is between 0 and (D-C). Besides, the cushion pad is not deformed due to no extrusion from the pipe, thus there is no elastic force to push the pipes out of the inner surface of component 11, with an overlap between diameter lines T of the pipes and diameter lines 13 and 14 of main component 11. After the installers cancel the pressure F, the gravity of the pipes themselves are not big enough to make the circular arc of component 11 open and overcome the resistance of the hard cleats, even if the pipes are overhung or in their vertical installation, the hard cleats 6 and 7 will block the pipes and prevent the pipes from falling off component 11. Furthermore, when installers turn or slide or take out the pipes in component 11, because the ∩ shape wings of the hard cleats clamp the cushion pads, the cushion pads are protected to avoid moving and falling off. Therefore, component 11 to which the sound-insulating cushion pads are adhering can firmly hold 2 sections of pipes at the same time on its own during pipe installation and preliminary test.

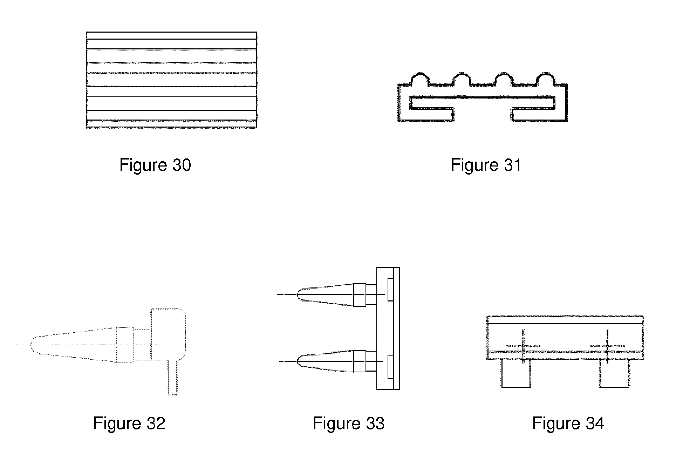

As a matter of fact, there are other embodiments for the present invention. For instance, the aforesaid cleats 6 and 7 may be embodied in many other forms and their connection to and/or insertion into main component 1 or component 11 can be done by other means and/or methods, for example, the form of hard cleat shown as in Figure 32, Figure 33 and Figure 34; the aforesaid cushion pads 4 and 5 may also be embodied in many other forms and shapes, for example, the form of cushion pad shown as in Figure 30 and Figure 31 ; the smallest distance C between left and right hard cleats 6 and 7 could be adjusted within 5‰ of the tolerance range; and the functions of locking mechanism 3 and connecting mechanism 8 may be achieved by many other different ways and means.

## Claims

1. A sound-insulating pipe clamp, with a pipe pre-fixing system, comprising two main coupling components (1, 2), a locking mechanism (3) for the two main coupling components and a connecting mechanism (8) for fixing the clamp to a support; wherein after the pipe is clamped by the two main coupling components and locked by the mechanism (3), a circular shape, or an approximate circular shape, is formed; to this end, the arc length of the first main coupling component (1) of the two main coupling components is greater than a semicircular arc, and that of the second main coupling component (2) is smaller than a semicircular arc; wherein this sound-insulating pipe clamp is **characterized in that**:
a) the sound-insulating cushion pads (4, 5) are adhering to the inner surfaces of the two main coupling components (1, 2), of which the first main coupling component (1) has an arc length that is greater than a semicircular arc, and the lenght of the inner arc surface of the first main coupling component (1) to which the sound-insulating cushion pad (5) is adhering is smaller than or at most equal to a semicircular arc;
b) the right and left inner sides of the arc surface where the inner surface is greater than or equal to the semicircular arc of the first main coupling component (1), which has an arc length that is greater than a semicircular arc, are equipped with hard cleats (6, 7).
c) the smallest distance (C) between the left and right hard cleats (6, 7) is a little less than the inner diameter (D) of the inner circular arc to which cushion pad (5) is adhering.
d) each cleat has a pair of wings that are located at both ends of the cleat and thus form the "∩" shape, wherein the two wings form the symmetrical left and right parts of the "∩" shape respectively, and the inner distance (X) between the two opposite wings is a little larger than or equal to the width (Y) of the cushion pad (5); both ends of the cushion pad (5) are clamped within the "∩" shape wings of cleats (6, 7) respectively, so that the cushion pad (5) is protected and to avoid moving and falling off.

2. The sound-insulating pipe clamp of claim 1 **characterized in that** the aforesaid hard cleats (6, 7) are inserted into two pairs of holes (9, 10) in the first main coupling component (1) and with their projecting parts tightly close against main component (1).

3. The sound-insulating pipe clamp of claim 1 **characterized in that** the aforesaid hard cleats (6, 7) are connected and/or adhering to the first main coupling component (1).

## Patentansprüche

1. Schalldämmende Rohrschelle, mit einem Rohr-Vorbefestigungssystem, aufweisend zwei Haupt-Kopplungsbauteile (1, 2), einen Verriegelungsmechanismus (3) für die zwei Haupt-Kopplungsbauteile und einen Kopplungsmechanismus (8) zur Befestigung der Schelle an einen Träger; wobei nach dem Klemmen des Rohrs durch die zwei Haupt-Kopplungsbauteile und der Verriegelung durch den Mechanismus (3) eine kreisrunde Form, oder eine annähernd kreisrunde Form, gebildet wird; zu diesem Zweck ist die Bogenlänge des ersten Haupt-Kopplungsbauteils (1) der zwei Haupt-Kopplungsbauteile größer als ein halbkreisförmiger Bogen und die des zweiten Haupt-Kopplungsbauteils (2) ist kleiner als ein halbkreisförmiger Bogen; wobei diese schalldämmende Rohrschelle **dadurch gekennzeichnet ist, dass**:
a) die schalldämmenden Kissenpolster (4, 5) an den Innenflächen der zwei Haupt-Kopplungsbauteile (1, 2) haften, wovon das erste Haupt-Kopplungsbauteil (1) eine Bogenlänge aufweist, die größer ist als ein halbkreisförmiger Bogen, und die Länge der Innenbogen-Oberfläche des ersten Haupt-Kopplungsbauteils (1), an dem das schalldämmende Kissenpolster (5) haftet, kleiner als oder höchstens gleich groß wie ein halbkreisförmiger Bogen ist;
b) die rechte und linke Innenseiten der Bogenfläche - wo die Innenfläche größer oder gleich dem halbkreisförmigen Bogen ist - des ersten Haupt-Kopplungsbauteils (1), welcher eine Bogenlänge aufweist, die größer als ein halbkreisförmiger Bogen ist, mit harten Stoppern (6, 7) ausgestattet sind;
c) der kleinste Abstand (C) zwischen den linken und rechten harten Stoppern (6, 7) ein wenig kleiner als das Innendurchmesser (D) des inneren kreisförmigen Bogens ist, an welchem das Kissenpolster (5) haftet;
d) jeder Stopper ein Paar Flügel aufweist, die an beiden Enden des Stoppers angeordnet sind und somit die n-Form bilden, wobei die zwei Flügel jeweils die symmetrischen linken und rechten Teile der n-Form bilden und der innere Abstand (X) zwischen den zwei gegenüberliegenden Flügeln ein wenig größer als oder gleich groß wie die Breite (Y) des Kissenpolsters (5) ist; beide Enden des Kissenpolsters (5) jeweils innerhalb der ∩-förmigen Flügel der Stopper (6, 7) befestigt sind, so dass das Kissenpolster (5) geschützt ist und, um Bewegung und Abfallen zu verhindern.

2. Schalldämmende Rohrschelle nach Anspruch 1,
**dadurch gekennzeichnet, dass** die vorgenannten harten Stopper (6, 7) in zwei Paar Löcher (9, 10) im ersten Haupt-Kopplungsbauteil (1) eingeführt werden, wobei ihre vorspringenden Teile dicht gegen das Haupt-Bestandteil (1) gepresst sind.

3. Schalldämmende Rohrschelle nach Anspruch 1,
**dadurch gekennzeichnet, dass** die vorgenannten harten Stopper (6, 7) verbunden sind und/oder am ersten Haupt-Kopplungsbauteil (1) haften.

## Revendications

1. Collier de tuyau insonorisant, avec un système de préfixation de tuyau, comprenant deux composants d'accouplement principaux (1, 2), un mécanisme de blocage (3) pour les deux composants d'accouplement principaux et un mécanisme de connexion (8) pour la fixation du collier à un support ; dans lequel, après que le tuyau a été fixé par les deux composants d'accouplement principaux et bloqué par le mécanisme (3), une forme circulaire, ou une forme approximativement circulaire, est constituée ; à cet effet, la longueur d'arc du premier composant d'accouplement principal (1) des deux composants d'accouplement principaux est supérieure à un arc semi-circulaire, et celle du deuxième composant d'accouplement principal (2) est inférieure à un arc semi-circulaire ; dans lequel ce collier de tuyau insonorisant est **caractérisé en ce que** :
a) les coussins amortisseurs insonorisants (4, 5) adhèrent aux surfaces intérieures des deux composants d'accouplement principaux (1, 2), dont le premier composant d'accouplement principal (1) présente une longueur d'arc supérieure à un arc semi-circulaire, et la longueur de la surface d'arc intérieure du premier composant d'accouplement principal (1) auquel adhère le coussin amortisseur insonorisant (5) est inférieure à ou tout au plus égale à un arc semi-circulaire ;
b) les faces intérieures droite et gauche de la surface d'arc - où la surface intérieure est supérieure ou égale à l'arc semi-circulaire - du premier composant d'accouplement principal (1) présentant une longueur d'arc supérieure à un arc semi-circulaire sont équipées de taquets durs (6, 7) ;
c) la distance (C) la plus petite entre les taquets durs (6, 7) de gauche et de droite est un peu moins grande que le diamètre intérieur (D) de l'arc circulaire intérieur auquel adhère le coussin amortisseur (5) ;
d) chaque taquet présente une paire d'ailes qui se trouvent aux deux extrémités du taquet et constituent ainsi la forme n, étant donné que les deux ailes forment respectivement les parties gauche et droite symétriques de la forme n, et la distance intérieure (X) entre les deux ailes opposées est légèrement supérieure ou égale à la largeur (Y) du coussin amortisseur (5) ; les deux extrémités du coussin amortisseur (5) sont respectivement fixées à l'intérieur des ailes en forme de n des taquets (6, 7) de manière à ce que le coussin amortisseur (5) soit protégé et afin d'éviter tout déplacement et toute chute.

2. Collier de tuyau insonorisant selon la revendication 1,
**caractérisé en ce que** les taquets durs (6, 7) susmentionnés sont insérés dans deux paires de trous (9, 10) dans le premier composant d'accouplement principal (1), leurs parties saillantes étant fermement pressées contre le composant principal (1).

3. Collier de tuyau insonorisant selon la revendication 1,
**caractérisé en ce que** les taquets durs (6, 7) susmentionnés sont connectés et/ou adhèrent au premier composant d'accouplement principal (1).
